# EUROPÄISCHE PATENTSCHRIFT

(11) **EP 2 144 777 B1**
(45) Veröffentlichungstag und Bekanntmachung des Hinweises auf die Patenterteilung: **01.03.2017**
(21) Anmeldenummer: 07801896.7
(22) Anmeldetag: 25.08.2007
(51) Int. Cl.: B60K 6/547, F16H 37/06, F16H 3/08, B60L 1/00, B60L 3/00, B60L 11/14, B60K 6/40, B60K 6/48, F16H 3/091, B60L 15/20

(54) **VERFAHREN ZUM BETRIEB EINES HYBRIDANTRIEBSSYSTEMS SOWIE HYBRIDANTRIEBSSYSTEM MIT ZWEI TEILGETRIEBEN**
METHOD FOR THE OPERATION OF A HYBRID DRIVE SYSTEM AND HYBRID DRIVE SYSTEM COMPRISING TWO SUB-GEARBOXES
PROCEDE POUR FAIRE FONCTIONNER UN SYSTEME DE PROPULSION HYBRIDE ET SYSTEME DE PROPULSION HYBRIDE COMPORTANT DEUX ENGRENAGES PARTIELS

(30) Priorität: 14.05.2007 DE 102007022914
(43) Veröffentlichungstag der Anmeldung: 20.01.2010
(73) Patentinhaber: FEV GmbH, 52078 Aachen (DE)
(72) Erfinder: HELLENBROICH, Gereon, 52068 Aachen (DE)
(74) Vertreter: Neumann, Ernst Dieter
(86) Internationale Anmeldenummer: PCT/EP2007/007471
(87) Internationale Veröffentlichungsnummer: WO 2008/138387

(56) Entgegenhaltungen:
- EP-A- 1 270 301
- EP-A- 1 504 946
- US-A1- 2005 101 432

## Beschreibung

Die Erfindung betrifft ein Hybridantriebssystem mit einer ersten Antriebsmaschine, insbesondere einem Verbrennungsmotor, und einer zweiten Antriebsmaschine, insbesondere einer elektrischen Maschine, für ein Kraftfahrzeug. Andere Typen der Antriebsmaschinen sind nicht ausgeschlossen. Beispielsweise können zwei elektrische Maschinen als erste - und zweite Antriebsmaschine vorgesehen sein oder neben einem Verbrennungsmotor als erste Antriebsmaschine eine hydraulische Maschine als zweite Antriebsmaschine.

Fahrzeuge mit Hybridantrieb in den unterschiedlichsten Ausführungen haben bei bestimmten Fahrzyklen ein günstigeres Verbrauchsverhalten als Fahrzeuge, die ausschließlich verbrennungsmotorisch angetrieben werden. Sie gewinnen daher am Markt zunehmende Bedeutung.

Wird eine elektrische Maschine als zweite Antriebsmaschine verwendet, kann diese als Motor und Generator verwendet werden. In der Motorfunktion, die die Versorgung durch eine Batterie bedingt, ist ein Anlassen eines Verbrennungsmotors oder eine Verwendung als Fahrantriebsmotor möglich. In der Verwendung als Generator dient sie zum Aufladen der Batterie, wobei die Energie vom Verbrennungsmotor oder aus der Rückgewinnung der kinetischen Fahrzeugenergie bezogen werden kann.

US 2005/0101432 A1 wird als nächstliegender Stand der Technik angesehen und offenbart ein Hybridantriebssystem mit einer ersten Antriebsmaschine in Form eines Verbrennungsmotors und eine zweite Antriebsmaschine in Form einer elektrischen Maschine für ein Kraftfahrzeug und das Hybridantriebssystem umfasst ein erstes Gangschaltteilgetriebe mit einer Eingangswelle, die mit einer Abtriebswelle koppelbar ist, mittels einer ersten Gruppe von Gangschaltzahnradpaaren, wobei die Eingangswelle mit der ersten Antriebsmaschine koppelbar ist. Das Hybridantriebssystem umfasst ferner ein zweites Gangschaltteilgetriebe mit einer Eingangswelle, die mit der Abtriebswelle koppelbar ist mittels einer zweiten Gruppe von Gangschaltzahnradpaaren, wobei die Eingangswelle mit der zweiten Antriebsmaschine antriebsverbunden ist.

Hybridantriebssysteme sind ferner in der EP 1 270 301A2, EP 1 504 946 A2, WO 2005/073005 A1, DE 100 49 514 A1 und DE 198 18 108 A1 beschrieben.

Aus der DE 199 60 621 A1 ist ein Hybridantrieb für Fahrzeuge mit einem schaltbaren Getriebe bekannt, das ein erstes schaltbares Teilgetriebe enthält, das wahlweise mit einem Brennstoffmotor und/oder einer elektrischen Maschine antriebsmäßig verbindbar ist, und ein zweites schaltbares Teilgetriebe enthält, das antriebsmäßig mit der elektrischen Maschine verbunden ist, welche als Elektromotor oder Generator betreibbar ist. Das erste Teilgetriebe umfaßt eine erste Vorgelegewelle und eine Abtriebswelle und weist sechs Gangstufen auf; das zweite Teilgetriebe umfaßt eine zweite Vorgelegewelle und die gleiche Abtriebswelle und weist drei Gangstufen auf.

Hiervon ausgehend liegt der vorliegenden Erfindung die Aufgabe zugrunde, ein Hybridantriebssystem sowle ein Verfahren zu dessen Betrieb bereitzustellen, das sich durch einen einfacheren Aufbau im Verhältnis zur Zahl der Gangstufen, die zur Verfügung stehen, auszeichnet. Hierbei soll insbesondere auch eine kompakte Bauweise für den Quereinbau in Kraftfahrzeugen möglich sein.

Die Aufgabe wird durch ein Hybridantriebssystem gemäß Anspruch 1 gelöst. Vorteilhafte Ausführungsformen ergeben sich aus den abhängigen Ansprüchen. wobei Anspruch 13 ein Verfahren zum Betrieb des Hybridantriebssystems betrifft.

Der wesentliche Lösungsansatz liegt in der Darstellung des verwendeten Getriebes durch zwei Teilgetriebe, deren Gangstufen zum Teil durch Gangstufen üblicher Art gebildet werden, bei dem Gangschaltzahnradpaare eine Eingangswelle unmittelbar mit der Abtriebswelle koppeln, und zum Teil durch Gangstufen gebildet werden, bei denen von einer Eingangswelle über ein freilaufendes Losrad auf der Abtriebswelle zunächst Drehmoment auf die zweite Eingangswelle geleitet wird, von der aus dann ein Gangschaltzahnradpaar diese zweite Eingangswelle unmittelbar mit der Abtriebswelle koppelt.

Durch eine sinnvolle Reihenfolge des Öffnens und Schließens der Reibungskupplung des Verbrennungsmotors sowie eine daran angepaßte Reihenfolge der Betätigung der Schalteinheiten der verschiedenen Gänge ist ein zugkraftfreies Schalten zwischen den Gängen möglich. Entscheidend für diese Art der Betätigung ist, daß bei der erfindungsgemäßen Getriebeanordnung das zu schaltende Element (Schaltkupplung, Schalteinheit) stets abgetrennt werden kann, während wenigstens ein Antrieb, entweder die elektrische Maschine oder der Verbrennungsmotor, mit, der Abtriebswelle in drehmomentübertragender Verbindung steht. Beim Schalten könnten die Drehzahlen an den zu schaltenden Elementen durch entsprechende Steuerung der elektrischen Maschine und des Verbrennungsmotors angeglichen werden. Die Reibungskupplung des Verbrennungsmotors läßt ein schleifendes Zuschalten des Verbrennungsmotors zu, wie es üblich ist.

Aufgrund der gewählten Anordnung der elektrischen Maschine und des Verbrennungsmotors erfolgt bei Betrieb beider Antriebsmaschinen eine Drehmomentaddition. Wie nachfolgend dargestellt, ist ein Anfahren mit der elektrischen Maschine sowie ein Generatorbetrieb der elektrischen Maschine im Rekuperations-Modus möglich.

Beim Betrieb des Hybridantriebssystems ist vorzugsweise vorgesehen, daß ein Wechsel zwischen einer Kopplung der ersten Antriebswelle mit der Abtriebswelle und einer Kopplung der zwelten Antriebswelle mit der Abtriebswelle ausschließlich durch ein Schalten einzelner Gangschaltzahnradpaare bewirkt wird.

Folgende Wesensmerkmale und Vorteile des Gegenstandes der Erfindung werden nachstehend nochmals tabellarisch benannt:
- Gangwechsel ohne Zugkraftunterbrechung, d.h. zumindest eine der Antriebsmaschinen kann bei der Betätigung eines oder mehreren Schaltelemente weiterhin Drehmoment auf die Abtriebswelle übertragen, allerdings ist diese Funktion je nach Wahl der Übersetzung nicht bei allen möglichen Schaltabfolgen gegeben;
- rein elektrisches Fahren ist möglich;
- Starten des Verbrennungsmotors durch die elektrische Maschine ist möglich;
- Starten des Verbrennungsmotors während des rein elektrischen Fahrens mit der elektrischen Maschine ist möglich, auch über verschiedene Gänge;
- aktive Synchronisation der Schaltvorgänge ist möglich;
- Boostbetrieb, d.h. zeitweiliges Zuschalten der elektrischen Maschine ist möglich;
- Rekuperation, d.h. Rückgewinnung von Energie mittels der elektrischen Maschine beim Abbremsen des Fahrzeugs ist möglich;
- Klimakompressorbetrieb bei Stillstand des Fahrzeuges ist möglich;
- Erhalten der AMT-Funktionalität (automated manual transmission) bei Ausfall der elektrischen Maschine (fail safe);
- guter Wirkungsgrad durch verbrauchsoptimierte Schaltstrategien unter Nutzung des guten Wirkungsgrades eines konventionellen Schaltgetriebes (Zahnradgetriebes) und damit Kraftstoffeinsparung ist möglich;
- je nach Wahl der Schaltelemente und der Reibungskupplung ist keine Getriebehydraulik erforderlich.

Zur Darstellung einer nicht- hybriden Getriebevariante kann die elektrische Maschine in der Größe sehr stark reduziert werden. Sie kann dann weiterhin als Anlasser, auch für Start-Stopp-Betrieb, als Lichtmaschine und zur aktiven Synchronisation des Getriebes verwendet werden. Dabei ist in begrenztem Umfang eventuell auch ein Boostbetrieb, d.h. ein elektrischer Zusatzantrieb und ein Rekuperationsbetrieb, d.h. elektrische Energierückgewinnung denkbar.

Gegenüber bekannten Getrieben der eingangs genannten Art werden durch das Hintereinanderschalten mehrerer Gangschaltzahnradpaare in einem Teil der Schaltzustände zusätzliche Gänge generiert. Dabei kann bei gleicher Gangstufenzahl eine geringere mechanische Komplexität (Anzahl der Wellen, Anzahl der Schaltelemente, Anzahl der Zahnräder) sichergestellt werden, insbesondere bei einem Getriebe für einen Frontantrieb mit Motorquereinbau.

Eine separate Kupplungseinheit für das Zusammenschalten der Eingangswellen entfällt völlig. Die Gangschaltzahnradpaare werden für das Zusammenschalten der Eingangswellen verwendet.

Die verschiedenen Betriebszustände, die vorstehend nur angedeutet wurden, ergeben sich detailliert aus der nachfolgenden Zeichnungsbeschreibung.

Zwei bevorzugte Ausführungsbeispiele der Erfindung sind in den Zeichnungen dargestellt und werden nachstehend beschrieben. Hierin zeigen
- Figur 1: das Getriebeschema eines erfindungsgemäßen Hybridantriebssystems in einer ersten Ausführung in Neutralstellung;
- Figur 2: das Getriebeschema nach Figur 1 beim Anfahren und Fahren im ersten Gang:
- Figur 3: das Getriebeschema nach Figur 1 beim Umschalten in den zweiten Gang;
- Figur 4: das Getriebeschema nach Figur 1 beim Umschalten der elektrischen Maschine in einen höheren Gang;
- Figur 5: das Getriebeschema nach Figur 1 beim Hochschalten vom zweiten Gang in den dritten Gang;
- Figur 6: das Getriebeschema nach Figur 1 beim Hochschalten vom dritten Gang in den vierten Gang;
- Figur 7: das Getriebeschema nach Figur 1 beim Hochschalten vom vierten Gang in den fünften Gang;
- Figur 8: das Getriebeschema nach Figur 1 beim Umschalten der elektrischen Maschine in einen höheren Gang;
- Figur 9: das Getriebeschema nach Figur 1 beim Hochschalten vom fünften Gang in den sechsten Gang;
- Figur 10: das Getriebeschema nach Figur 1 beim Hochschalten vom sechsten Gang in den siebten Gang;
- Figur 11: das Getriebeschema nach Figur 1 beim Anfahren und Fahren mit der elektrischen Maschine EM;
- Figur 12: das Getriebeschema nach Figur 1 beim Anlassen des Verbrennungsmotors CE durch die elektrische Maschine EM beim elektrischen Fahrantrieb;
- Figur 13: das Getriebeschema nach Figur 1 im Fahrzeugstillstand beim Anlassen des Verbrennungsmotors CE durch die elektrische Maschine EM im Fahrzeugstillstand;
- Figur 14: das Getriebeschema nach Figur 1 im Fahrzeugstillstand bei Kompressorantrieb;
- Figur 15: zeigt das Getriebeschema eines erfindungsgemäßen Hybridantriebsystems in einer zweiten abgewandelten Ausführung in Neutralstellung;

- Figur 16: zeigt das Getriebeschema eines erfindungsgemäßen Hybridantriebsystems in einer dritten abgewandelten Ausführung in Neutralstellung;
- Figur 17: zeigt eine räumliche Darstellung eines erfindungsgemäßen Hybridantriebssystems in einer vierten abgewandelten Ausführung;
- Figur 18: zeigt ein Getriebediagramm unter Berücksichtigung der verschiedenen Gangstufen;
- Figur 19: zeigt die Drehmomentkurven der beiden Antriebsmaschinen über ihrer Drehzahl;
- Figur 20: zeigt die Drehzahlen der Antriebsmaschinen sowie die Antriebsachsendrehmomente über der Fahrzeuggeschwindigkeit.

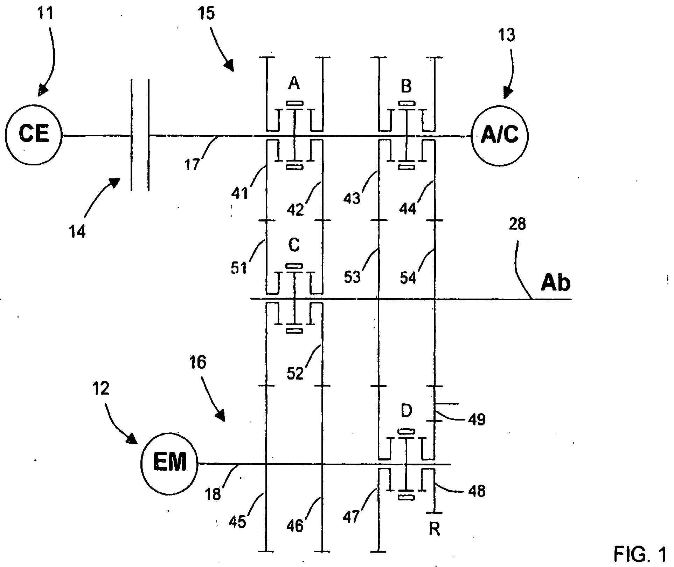

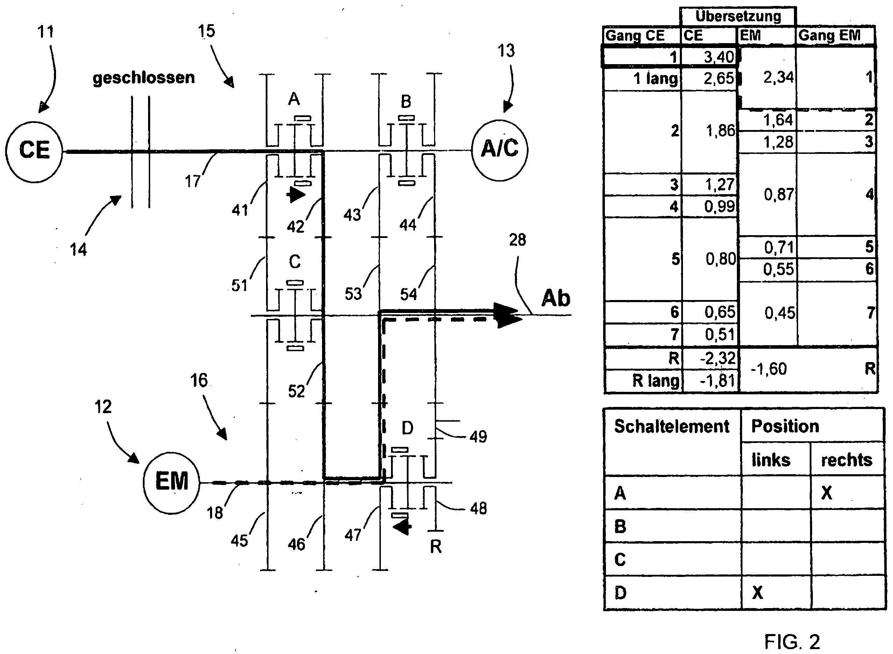

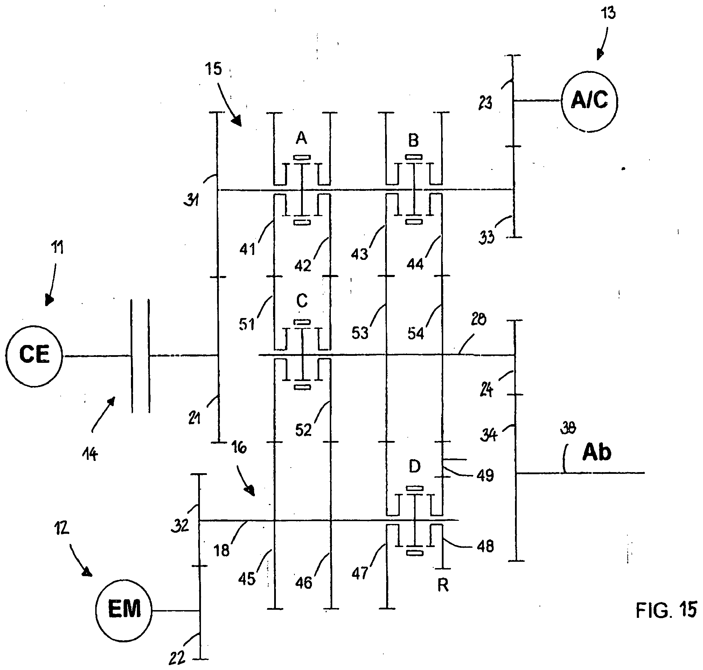

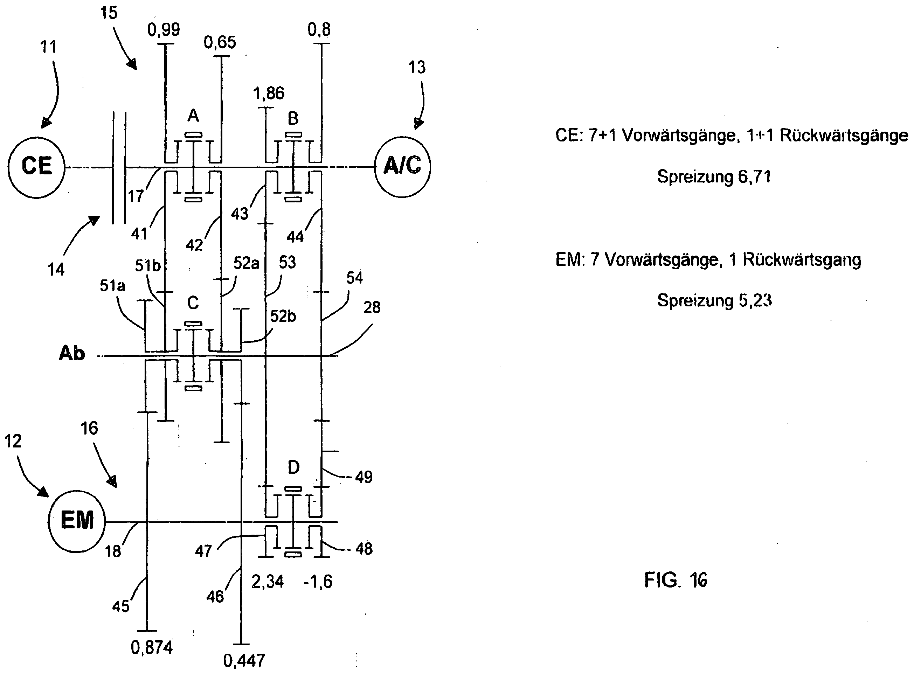

In Figur 1 ist ein erfindungsgemäßes Hybridantriebssystem in einer ersten Ausführung dargestellt. Die nachfolgende Beschreibung der Figur 1 gilt grundsätzlich auch für die Figuren 2 bis 14, die unterschiedliche Schaltzustände des Getriebeschemas nach Figur 1 darstellen und im weiteren Sinn auch für die Figuren 15 und 16, die das erfindungsgemäße Hybridantriebssystem in einer zweiten und dritten abgewandelten Ausführung darstellen.

Es ist ein Hybridantriebssystem dargestellt, das eine Hauptantriebsmaschine 11, hier in Form eines Verbrennungsmotors 11 (Combustion Engine CE), eine Zusatzantriebsmaschine 12, hier in Form einer elektrischen Maschine (EM), und eine Nebenabtriebsmaschine 13, hier in Form eines Kompressors für eine Klimaanlage (Airconditioning A/C) umfaßt. Der Verbrennungsmotor 11 ist über eine Reibungskupplung 14 als Anfahrelement, die als Naß- oder Trockenkupplung ausgeführt sein kann, mit dem Getriebe koppelbar. Das Getriebe umfaßt zwei Gangschaltteilgetriebe 15, 16 (Stufenwechselgetriebe), die sich dadurch auszeichnen, daß sie jeweils eine Eingangswelle 17 bzw. 18 aufweisen. Die Eingangswelle 17 des ersten Gangschaltteilgetriebes 15 ist über die Reibungskupplung 14 mit dem Verbrennungsmotor 11 koppelbar während die Eingangswelle 18 des zweiten Gangschaltteilgetriebes 16 fest mit der elektrischen Maschine 12 gekoppelt ist. Die Nebenabtriebsmaschine 13 ist ebenfalls fest mit der Eingangswelle 17 des ersten Garigschaltteilgetriebes 15 gekoppelt. Die Eingangswelle 17 ist über vier Zahnradpaarungen 41/51, 42/52, 43/53, 44/54 mit einer Abtriebswelle 28 gekoppelt. Die Eingangswelle 18 ist über vier Zahnradpaarungen 45/51, 46/52, 47/53, 48/54 ebenfalls mit der Abtriebswelle 28 gekoppelt. Die Abtriebswelle 28 kann über eine hier nicht dargestellte Getriebestufe mit dem Differentialgetriebe einer Fahrzeugachse verbunden sein. Im Gangschaltteilgetriebe 15 sind die Zahnräder 41, 42, 43, 44 auf der ersten Eingangswelle 17, die mit Zahnrädern 51, 52, 53, 54 auf der Abtriebswelle 28 zusammenwirken, sämtlich Schalträder, wobei sich die Zahnräder 41, 42 eine erste Schaltreinheit A teilen und die Zahnräder 43, 44 eine zweite Schalteinheit B. Darüber hinaus sind auch die Zahnräder 51, 52 auf der Abtriebswelle 28 erfindungsgemäß Schalträder, die von einer dritten Schalteinheit C betätigt werden.

Im zweiten Gangschaltteilgetriebe 16 sind die Zahnräder 45, 46 Festräder die mit den Zahnrädern 51, 52 auf der Abtriebswelle 28 Zahnradpaare bilden, wobei letztere Schalträder sind, die gemeinsam von der Schalteinheit C geschaltet werden. Dagegen sind die Zahnräder 47, 48 auf der zweiten Eingangswelle 18, die mit dem als Festrädern ausgeführten Zahnrädern 53, 54 auf der Abtriebswelle 28 Zahnradpaarungen bilden, Schalträder, die mittels einer vierten Schalteinheit D geschaltet werden. Das Zahnrad 48 wirkt über ein Zwischenrad 49 auf das Zahnrad 54 ein, so das diese Verzahnungsgruppe zur Darstellung eines Rückwärtsganges R geeignet ist.

Durch die Ausgestaltung der Zahnradpaarungen, bei denen jeweils beide Räder Schalträder sind, ist zum einen ein üblicher Gangwechsel unter Einbeziehung des Gangschaltteilgetriebes 15 und des Gangschaltteilgetriebes 16 für den Fahrzeugantrieb möglich, zum anderen ist hiermit die Möglichkeit das Hintereinenderschaltens von Übersetzungsstufen aus beiden Gangschaltteilgetrieben 15, 16 gegeben, so daß sich die effektive Anzahl der Gänge des Getriebes erhöht.

In Figur 2 ist der Schaltzustand für die Vorwärtsfahrt im ersten Gang unter Einsatz beider Antriebsmaschinen (CE, EM) gezeigt. Die Reibungskupplung 14 ist geschlossen. Das Schaltelement A ist nach rechts verschoben. Hiermit wird für den Verbrennungsmotor 11 der erste Gang dargestellt durch Einsatz der Zahnräder 42, 52 und 46 unter Einleitung von Drehmoment von der ersten in die zweite Eingangswelle 18, während der erste Gang für die elektrische Maschine durch das Verschieben des Schaltelements D nach links eingelegt wird. Beide Antriebsmaschinen treiben die Abtriebswelle 28 durch das Zusammenwirken der Zahnräder 47 und 53. Das als Zwischenrad wirkende Zahnrad 52 läuft frei auf der Abtriebswelle 28. Bei einem Verschieben des Schaltelements A nach links würde sich ein langer erster Gang 1L für den Verbrennungsmotor 11 ergeben, der jedoch zu eng gestuft wäre.

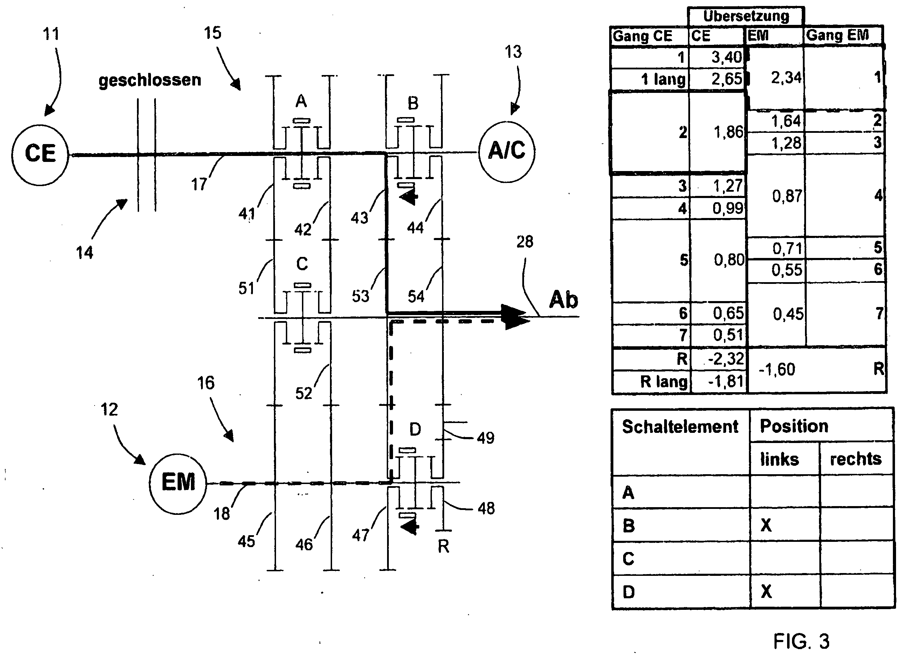

In Figur 3 ist das Umschalten vom vorgenannten ersten Gang für den Verbrennungsmotor 11 in den zweiten Gang dargestellt wiederum unter Einsatz beider Antriebsmaschinen CE, EM. Die Reibungskupplung 14 ist geschlossen. Im zweiten Teilgetriebe 16 wird durch Belassen des Schaltelements D in der linken Position der erste Gang für die elektrische Maschine 12 durch die Paarung der Zahnräder 47, 53 beibehalten, so daß das erste Teilgetriebe 15 ohne Zugkraftunterbrechung geschaltet werden kann. Nach dem Öffnen der Reibungskupplung 14 wird das Schaltelement A ist in die neutrale Position gebracht, während das Schaltelement B nach links verschoben wird, so daß jetzt die Zahnräder 43, 45 wirksam sind. Nach einem Schließen der Reibungskupplung 14 befindet sich der Verbrennungsmotor 11 im zweiten Gang für den Verbrennungsmotor.

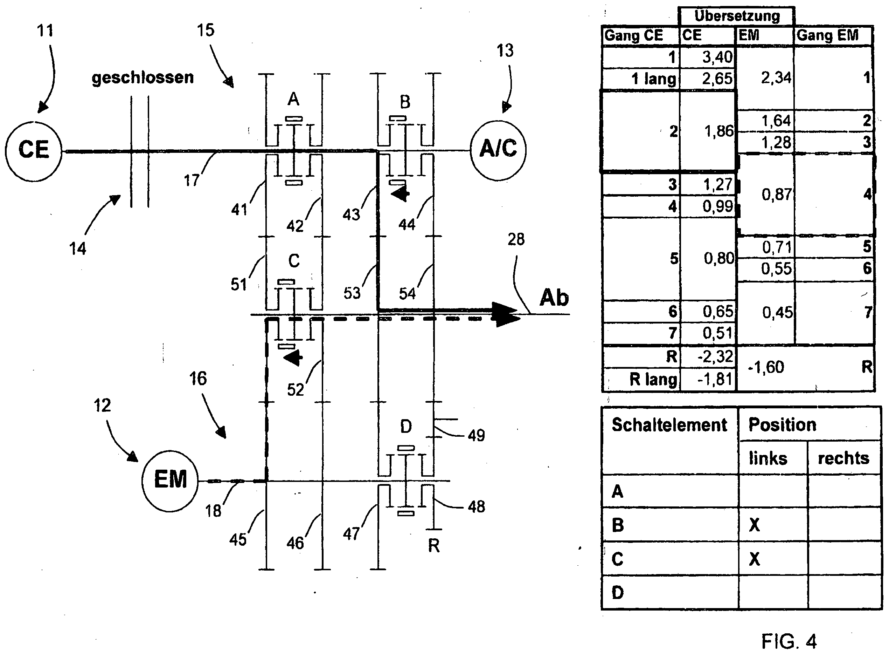

In Figur 4 findet sich der Schaltzustand zur Vorbereitung des nächsten Gangwechsels, wobei das Schaltelement B weiterhin nach links verschoben ist, so daß bei geschlossener Reibungskupplung 14 weiterhin der zweite Gang für den Verbrennungsmotor 11 durch die wirksame Zahnradpaarung 43, 53 gebildet wird. Dagegen wird das Schaltelement D in die neutrale Position verschoben, so daß der erste Gang des zweiten Teilgetriebes 16 herausgenommen wird. Die elektrische Maschine 12 kann nun den nächsten Gang vorsynchronisieren, anschließend wird das Schaltelement C nach links verschoben so daß die elektrische Maschine 12 die Abtriebswelle 28 über die wirksame Zahnradpaarung 45, 51 antreibt, die den vierten Gang für die elektrische Maschine bilden. Die Gänge EM 2 und EM 3 werden in diesem Beispiel übersprungen.

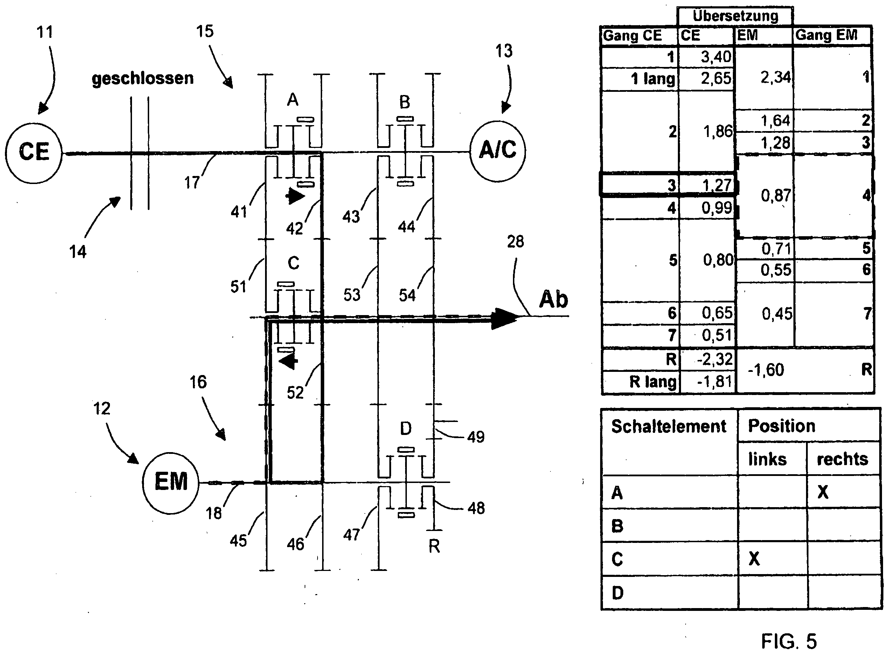

In Figur 5 ist der Übergang vom zweiten in den dritten Gang des Verbrennungsmotors 11 bei Einsatz beider Antriebsmaschinen gezeigt. Die Reibungskupplung 14 ist geschlossen. Im zweiten Teilgetriebe 16 ist weiterhin der vierte Gang der elektrischen Maschine 12 in Form der Verzahnungspaarung 45, 51 eingelegt, so daß im ersten Teilgetriebe 15 ohne Zugkraftunterbrechung an der Abtriebswelle 28 ein Gangwechsel erfolgen kann. Nach dem Öffnen der Reibungskupplung 14 wird hierzu das Schaltelement B in die neutrale Position überführt, während das Schaltelement A nach rechts verschoben wird. Danach wird die Reibungskupplung 14 wieder geschlossen. Hiermit wird der dritte Gang des Verbrennungsmotors 11 dargestellt, der das Zusammenwirken der Zahnräder 42, 52 und 46 bewirkt, um von der ersten Eingangswelle 17 Drehmoment auf zweite Eingangswelle 18 zu leiten. Das Zwischenrad 52 ist von der Abtriebswelle 28 hierbei freigeschaltet.

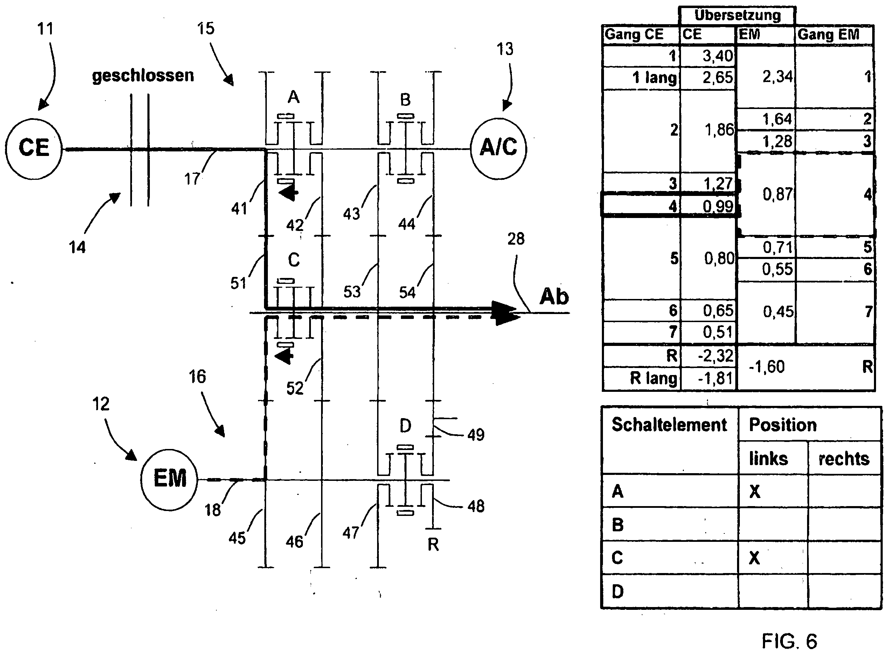

In Figur 6 ist der Übergang vom dritten auf den vierten Gang im Antrieb vom Verbrennungsmotor 11 dargestellt. Die Reibungskupplung 14 ist geschlossen. Das zweite Teilgetriebe 16 bleibt in der vorher bereits erreichten Stellung in seinem vierten Gang, wobei das Schaltelement C nach links verschoben ist und die Zahnradpaarung 45, 51 zwischen zweiter Eingangswelle 18 und Abtriebswelle 28 wirksam bleibt. Ausgehend von der vorher gezeigten Position wird das Schaltelement A nach dem Öffnen der Reibungskupplung 14 von rechts nach links verschoben, so daß unmittelbar die Zahnräder 41, 51 mit eingekoppelt werden, die den vierten Gang des Verbrennungsmotors 11 bilden. Anschließend wird die Reibungskupplung 14 wieder geschlossen

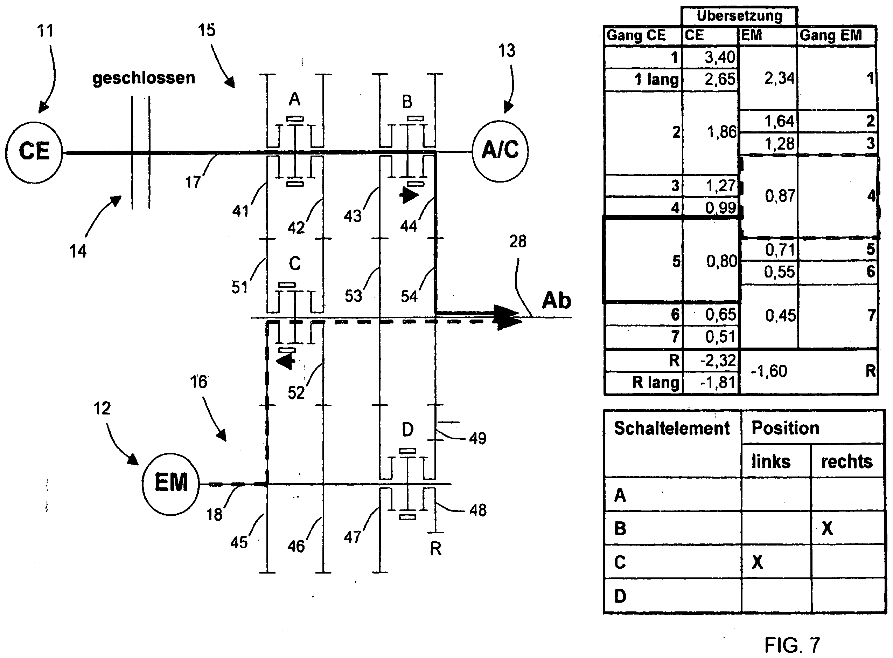

In Figur 7 ist der Übergang vom vierten in den fünften Gang im Antriebsstrang des Verbrennungsmotors 11 gezeigt, wobei der Antrieb der elektrischen Maschine 12 weiterhin im vierten Gang des zweiten Teilgetriebes bleibt um ein Schalten ohne Zugkraftunterbrechung zu ermöglichen, d.h. das Schaltelement C ist weiterhin nach links verschoben um Drehmoment von der zweiten Eingangswelle 18 auf die Abtriebswelle 28 im vierten Gang der elektrischen Maschine zu übertragen. Nach einem Öffnen der Reibungskupplung 14 wird das zuvor nach links verschobene Schaltelement A in die neutrale Position überführt, um das Zahnrad 41 von der Eingangswelle 17 zu entkoppeln. Zugleich wird ist das Schaltelement B nach rechts verschoben, um das Zahnrad 44 mit der Eingangswelle 17 fest zu verbinden. Hierdurch wird die Zahnradpaarung 44, 54 wirksam, die den fünften Gang für den Antrieb des Verbrennungsmotors bildet. Anschließend wird die Reibungskupplung 14 wieder geschlossen.

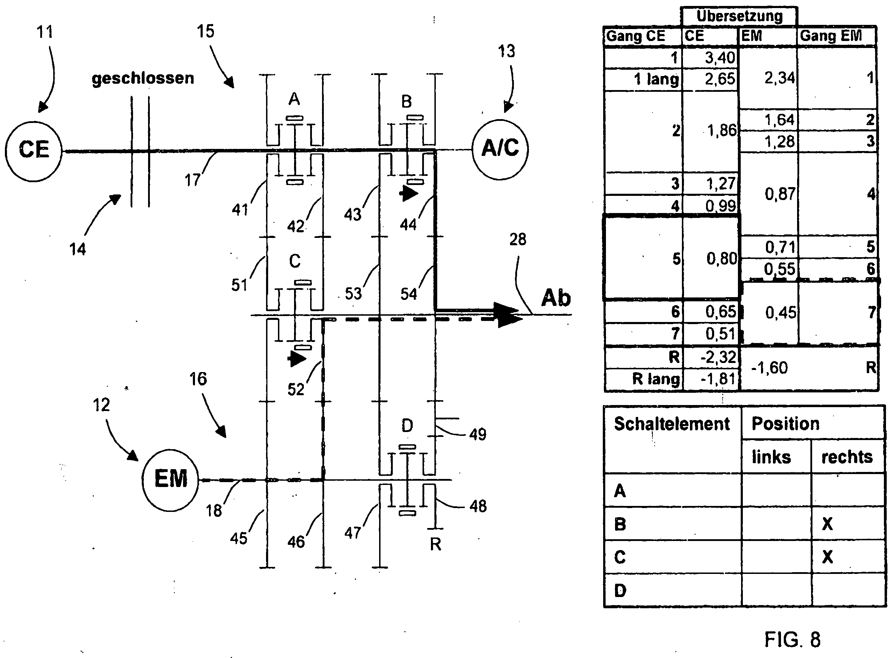

In Figur 8 ist dargestellt, wie zur Vorbereitung des nächsten Gangwechsels im Antrieb vom Verbrennungsmotor 11 der Antrieb vom Elektromotor 12 verändert wird, indem das Schaltelement C von links zunächst in die Neutralstellung verschoben wird, um den vierten Gang des zweiten Teilegetriebes 16 herauszunehmen. Die elektrische Maschine kann nun den nächsten Gang vorsynchronisieren. Anschließend wird das Schaltelement C nach rechts verschoben. Hiermit wird im Antrieb von der elektrischen Maschine 12 die Zahnradpaarung 46, 52 wirksam, die den siebten Gang im zweiten Teilgetriebe, d.h. von der elektrischen Maschine darstellt. während der Antrieb des Verbrennungsmotor 11 in der zuvor beschriebenen Übersetzung der Zahnradpaarung 44, 54 bleibt. Die Gänge EM 5 und EM 6 werden in diesem Beispiel übersprungen.

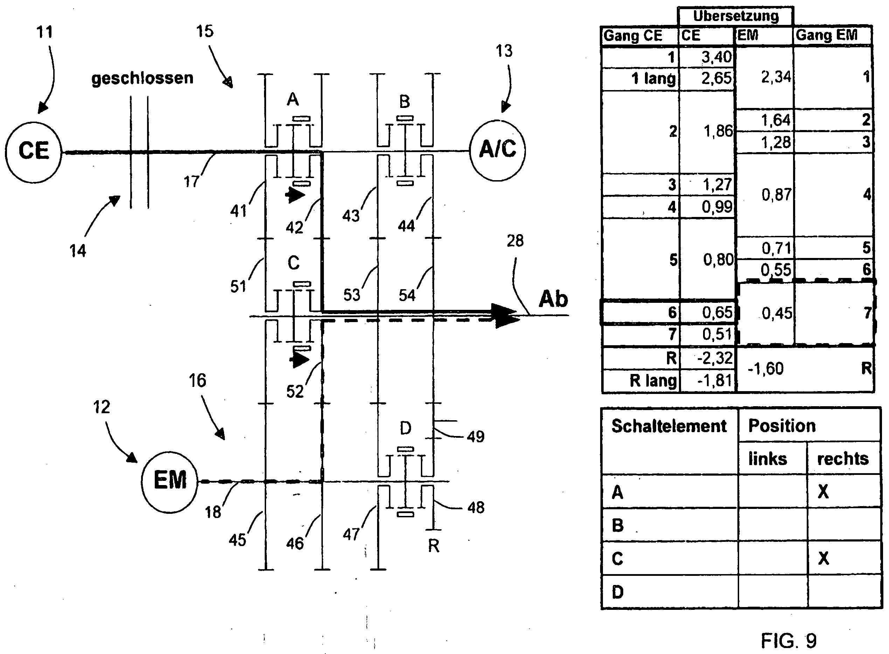

In Figur 9 ist dargestellt, wie nunmehr bei Beibehaltung des durch die Zahnradpaarung 46, 52 gebildeten siebten Ganges der elektrischen Maschine 12, d.h. bei nach rechts verschobenem Schaltelement C der Wechsel im Antrieb vom Verbrennungsmotor 11 erfolgt. Hier ist die Reibungskupplung 14 zunächst geöffnet. Das zuvor nach rechts verschobene Schaltelement B wird in die neutrale Position überführt, während das Schaltelement A nach rechts verschoben wird. Hiermit wird das Zahnrad 42 mit seiner Eingangswelle 17 gekoppelt, so daß der Antrieb von der Eingangswelle 17 auf die Abtriebswelle 28 über die Zahnradpaarung 42, 52 erfolgt, die den sechsten Gang für den Verbrennungsmotor 11 bildet. Abschließend wird die Reibungskupplung 14 wieder geschlossen.

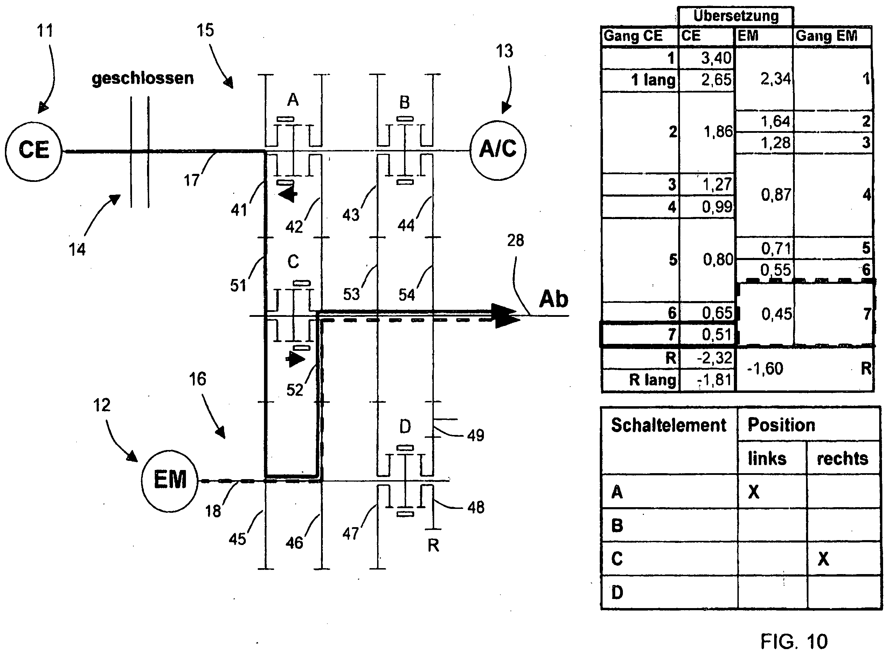

In Figur 10 ist gezeigt, wie unter Beibehalten der Schaltstellung im zweiten Teilgetriebe 16 für den Antrieb von der elektrischen Maschine 12, nämlich unter Beibehaltung des siebten Ganges, der durch die Zahnradpaarung 46, 52 gebildet wird, nunmehr auch der Antrieb vom Verbrennungsmotor 11 der Wechsel in den siebten Gang erfolgt. Hierzu wird das zuvor nach rechts verschobene Schaltelement A nach dem Öffnen der Reibungskupplung nach links verschoben. Das Zahnrad 42 wird von der Eingangswelle entkoppelt, während das Zahnrad 41 an die Eingangswelle 17 angekoppelt wird. Es ist damit die Zahnradpaarung 41, 51 im Eingriff. Da jedoch das Zahnrad 51 von der Abtriebswelle 28 entkoppelt ist, wird nach einem Schließen der Reibungskupplung 14 über die Zahnradgruppe 41, 51, 45 Drehmoment von der ersten Eingangswelle 17 auf die zweite Eingangswelle 18 übertragen, die über die eingekuppelte Zahnradpaarung 46, 52 die Abtriebswelle 28 nunmehr im siebten Gang für den Verbrennungsmotor antreibt.

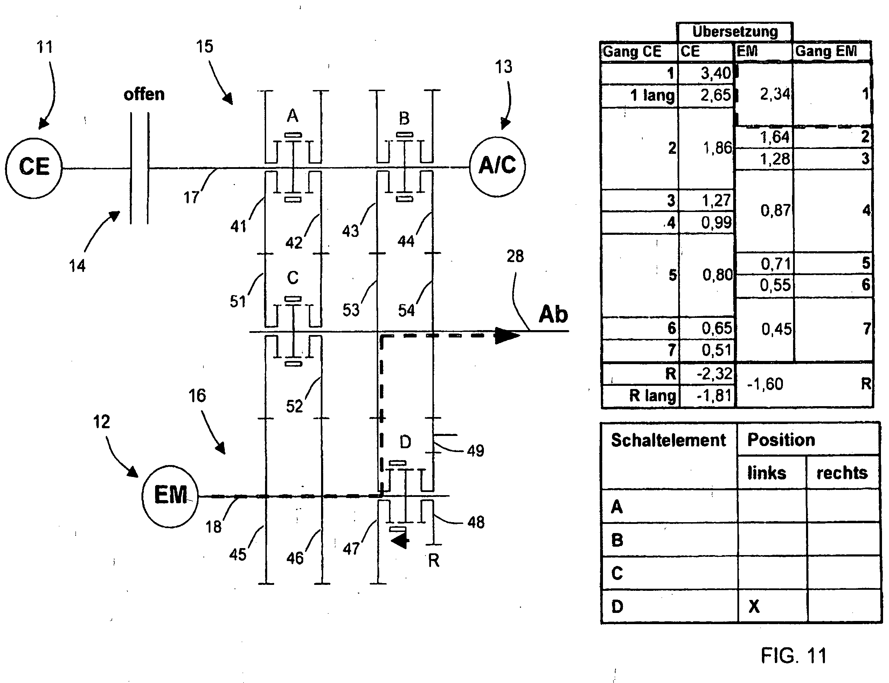

In Figur 11 ist ein Schaltzustand gezeigt, der einen elektrischen Fahrantrieb oder eine Energierückgewinnung in der elektrischer Maschine 12 darstellt, wobei der Verbrennungsmotor 11 durch Öffnen der Reibungskupplung 14 abgekoppelt ist und im übrigen durch Einstellen der Schaltelemente A, B, C in die Neutralstellung auch keine Drehmomentübertragung von der ersten Eingangswelle 17 auf die zweite Eingangswelle 18 erfolgen kann. Es ist ausschließlich das Schaltelement D nach links verschoben, wodurch das Zahnrad 47 mit der Eingangswelle 18 gekoppelt wird und die Zahnradpaarung 47, 53 den ersten Gang im zweiten Teilgetriebe 16 bildet. Das Übersetzungsverhältnis ist eins 1: 2,34.

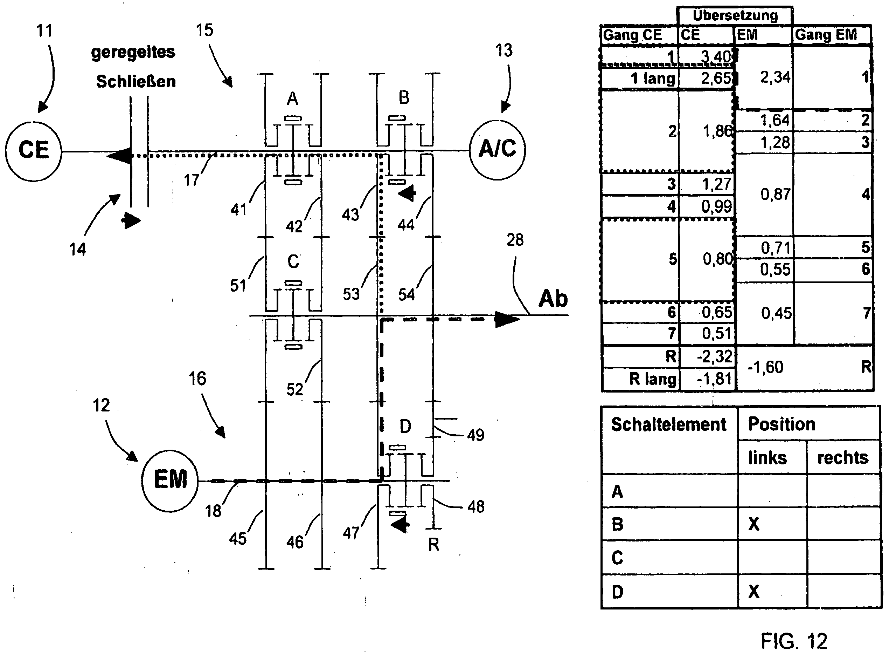

In Figur 12 ist dargestellt, wie ausgehend von der zuvor beschriebenen Situation im zweiten Teilgetriebe 16 nämlich bei eingelegten ersten Gang bei Antrieb von der elektrischen Maschine 12 durch Schließen der Reibungskupplung 14 und durch Verschieben des Schaltelements B nach links der Verbrennungsmotor unter Nutzung des zweiten Ganges angelassen werden kann. Das Anlassen des Verbrennungsmotors 11 kann jedoch auch unter Verwendung des ersten oder fünften Ganges des ersten Teilgetriebes 15 erfolgen. Hierzu müßten die Schaltelemente A, B, C in die in den vorangehenden Figuren im Zusammenhang mit der Vorwärtsfahrt gezeigten Positionen für die entsprechenden Gänge gebracht werden.

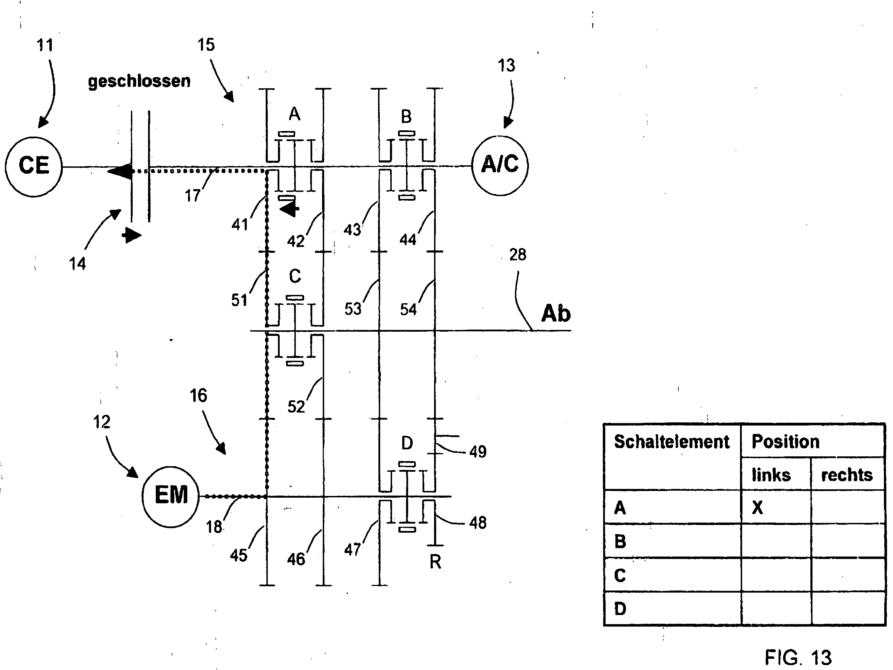

In Figur 13 zeigt das Anlassen des Verbrennungsmotors mittels der elektrischen Maschine 12. Das Schaltelement C ist in der Neutralstellung, so daß die Abtriebswelle 28 freigestellt ist und das Zahnrad 51 nur als Zwischenrad zwischen dem Zahnrad 45 und dem Zahnrad 41 dient. Das Zahnrad 41 ist durch Verschieben des Schaltelements A nach links mit der ersten Eingangswelle 17 gekoppelt, so daß durch Schließen der Reibungskupplung 14 der Verbrennungsmotor 11 gestartet werden kann.

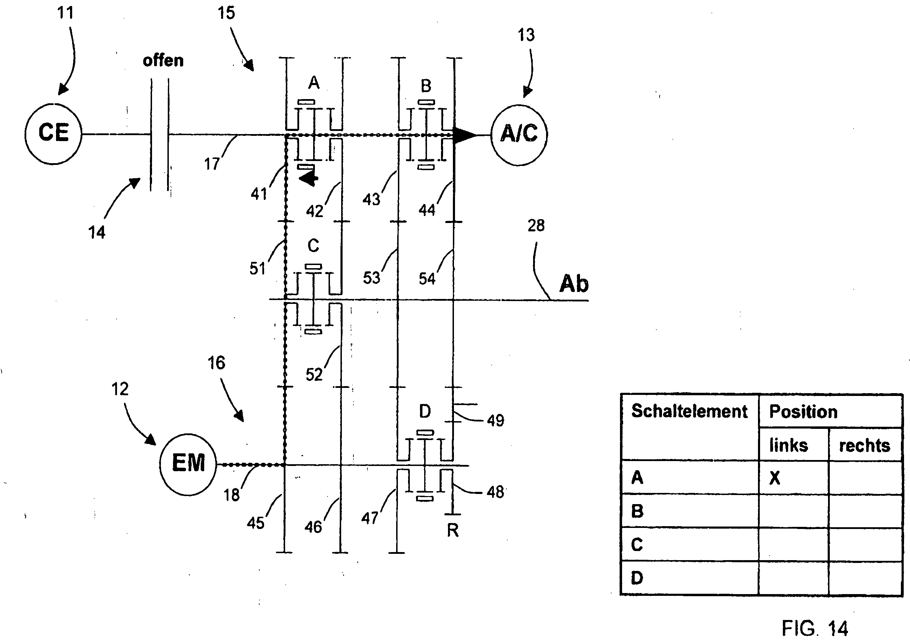

In Figur 14 ist ein Schaltzustand gezeigt, bei dem der Klimaanlagenkompressor 13 bei Fahrzeugstillstand durch den Elektromotor 12 elektrisch angetrieben werden kann. Der Verbrennungsmotor 11 ist durch Öffnen der Reibungskupplung 14 von der ersten Eingangswelle 17 entkoppelt. Durch Verschieben des Schaltelements C in die Neutralposition ist ebenfalls die Abtriebswelle 28 entkoppelt, so daß das Zahnrad 51 nur ein Zwischenrad zwischen dem Zahnrad 45 auf der zweiten Eingangswelle 18 und dem Zahnrad 41 auf der ersten Eingangswelle 17 bildet. Dieses letztere Zahnrad 41 ist durch Verschieben des Schaltelements A nach links mit der ersten Eingangswelle 17 gekoppelt, auf der der Klimaanlagenkompressor 13 fest angeordnet ist. Bei einem denkbaren Verschieben des Schaltelements A nach rechts könnte in gleicher Weise der Antrieb bei weiterhin entkoppelter Abtriebswelle 28 auch über die Zahnräder 46, 52 und 42 von der zweiten Eingangswelle 18 auf die erste Eingangswelle 17 zum Antrieb des Klimaanlagenkompressors 13 erfolgen.

Figur 15 zeigt eine abgewandelte Ausführung des Getriebes nach Figur 1, wobei auch hier alle Schaltelemente A, B, C, D in der Neutralposition dargestellt sind. In Figur 15 ist abweichend von Figur 1 die Ausgangsseite der Reibungskupplung 14 der ersten Antriebsmaschine 11 über eine Zahnradpaarung 21/31 mit der ersten Eingangswelle 17 antriebsverbundenen, die zweite Antriebsmaschine-12 über eine Zahnradpaarung 22/32 mit der zweiten Eingangswelle 18 antriebsverbunden und die Nebenantriebsmaschine 13 über eine Zahnradpaarung 23/33 mit der ersten Antriebswelle 17 antriebsverbunden. Schließlich ist die Abtriebswelle 28 über eine Zahnradpaarung 24/34 mit einer Ausgangswelle 38 gekoppelt. Alle übrigen Einzelheiten stimmen mit denen in Figur 1 überein.

Figur 16 zeigt eine abgewandelte Ausführung des Getriebes nach Figur 1, wobei auch hier alle Schaltelemente A, B, C, D in der Neutralposition dargestellt sind. In der hier gezeigten Ausführung sind die Zahnräder abweichend von den vorhergehenden Darstellungen mit wahren Größenverhältnissen dargestellt, um die verschiedenen gewünschten Übersetzungsverhältnisse der einzelnen Verzahnungspaarungen darzustellen, die als Zahlenwerte angegeben sind. Hierbei sind die Zahnräder 51 und 52, die die Schalträder auf der Abtriebswelle bilden, als Doppelräder 51a, 51b, 52a, 52b ausgebildet, die mit jeweils unterschiedlichen Zahnradgrößen mit den Rädern 41, 42 des ersten Teilgetriebes 15 zum einen und den Rädern 45, 46 des zweiten Teilgetriebes 16 zum anderen im Eingriff sind.

In dieser Konfiguration kann der Antrieb vom Verbrennungsmotor 11 über acht Vorwärtsgänge und zwei Rückwärtsgänge bei einer Spreizung von 6,71 erfolgen, während der Antrieb von der elektrischen Maschine 12 über sieben Vorwärtsgänge und ein Rückwärtsgang erfolgten kann, bei einer Spreizung von 5,23.

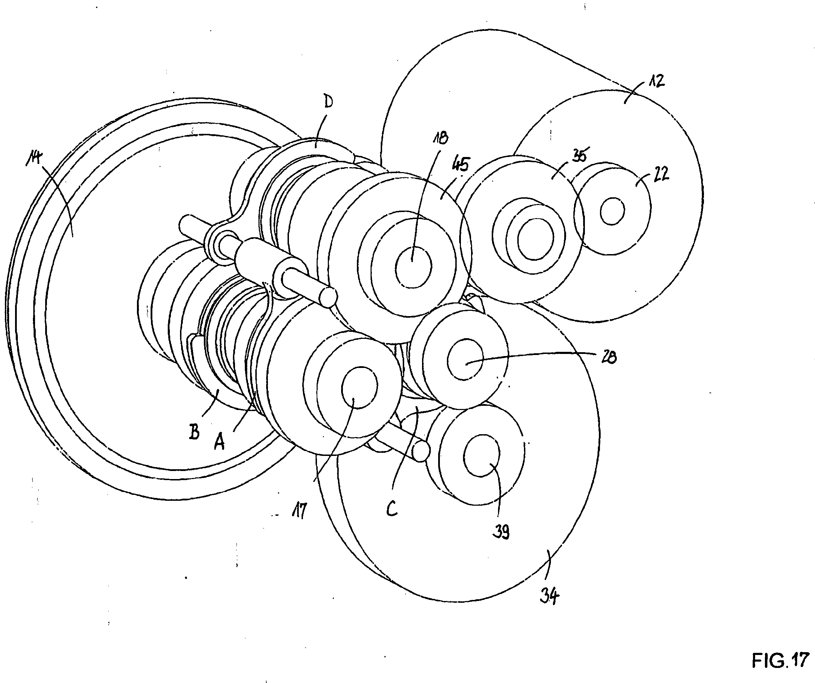

In Figur 17 ist die räumliche Anordnung des Getriebes in einer nochmals abgewandelten Ausführung dargestellt. Es sind die erste Eingangswelle 17, die zweite Eingangswelle 18 und die Ausgangswelle 28 in ihrer räumlichen, im Querschnitt ein Dreieck aufspannenden Anordnung erkennbar, ebenso die zwei Schalteinheiten A, B auf der ersten Eingangswelle 17, die Schalteinheit D auf der zweiten Eingangswelle 18 sowie die Schalteinheit C auf der Ausgangswelle 28. Das Schwungrad und die Kupplung 14 des Verbrennungsmotors sind hierbei koaxial zur ersten Eingangswelle 17 angeordnet. Dagegen ist die elektrische Maschine 12 über ein Zahnrad 22 und ein Zwischenrad 35 direkt mit dem Zahnrad 45 und damit mit der zweiten Eingangswelle 18 in fester Übersetzung antriebsverbunden. Schließlich wirkt die Abtriebswelle 28 über ein nicht sichtbares Zahnrad auf das Zahnrad 34, das direkt auf dem Differential 39 des Abtriebs sitzt.

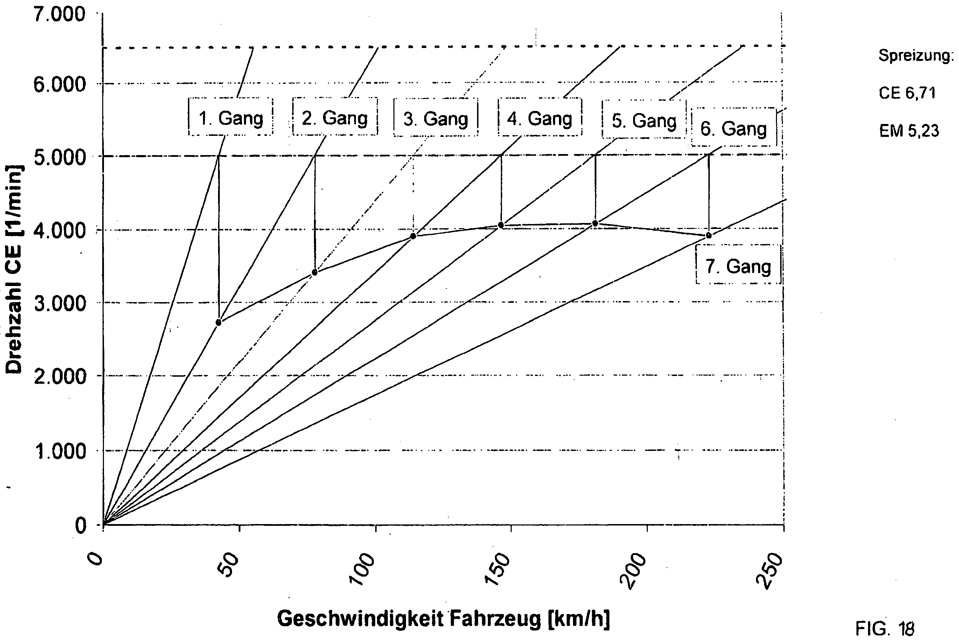

In Figur 18 ist ein Diagramm gezeigt, in dem die Drehzahl des Verbrennungsmotors über der Fahrzeuggeschwindigkeit mit den Übersetzungsverhältnissen der einzelnen Gangstufen dargestellt ist. Es ergibt sich für den Verbrennungsmotor eine Spreizung von 6,71 und für die elektrische Maschine eine Spreizung von 5,23.

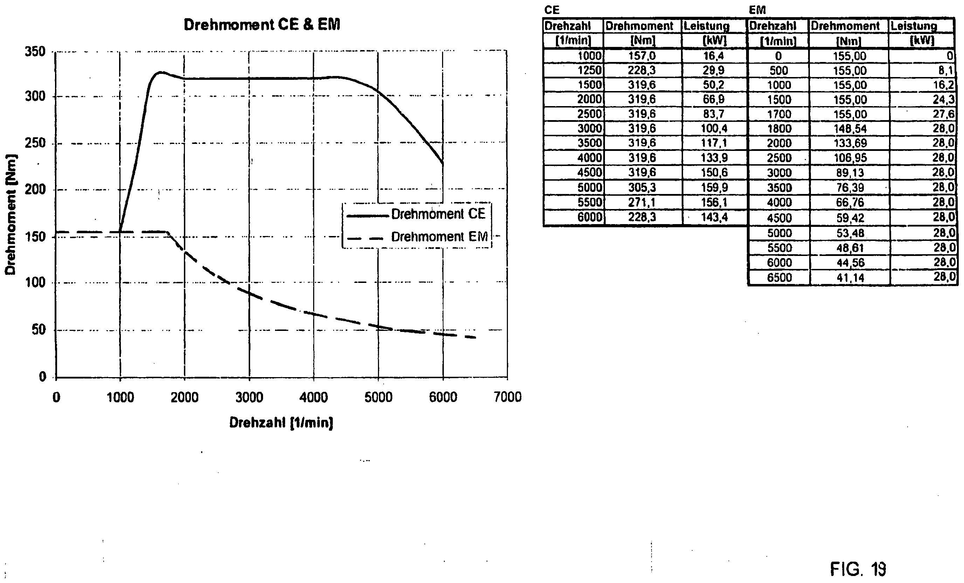

In Figur 19 sind die Drehmomentverläufe von Verbrennungsmotor und elektrischer Maschine über der jeweiligen Maschinendrehzahl sowohl graphisch in einem Diagramm als auch mit Zahlenwerten in einer Tabelle dargestellt. Tabelle und Diagramm sind gleichbedeutend.

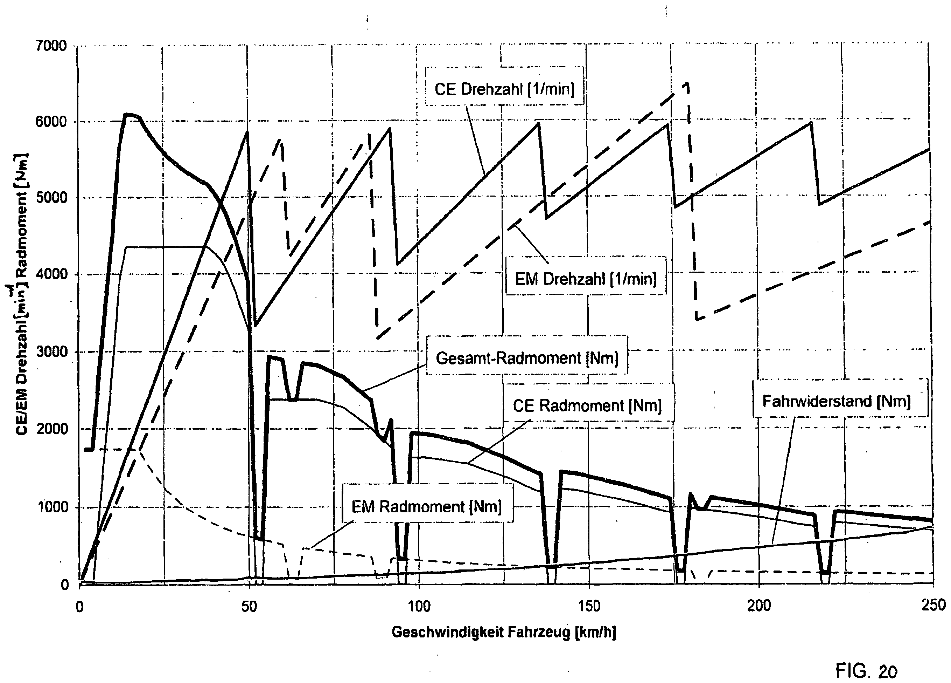

In Figur 20 sind die Maschinendrehzahlen und die Radmomente über der Fahrzeuggeschwindigkeit dargestellt. Darüber hinaus ist der Fahrwiderstand über der Fahrzeuggeschwindigkeit dargestellt.

Das wechselweise Schalten der Antriebsmaschinen 11, 12 wird erkennbar.

### Bezugszeichenliste

- 11: Verbrennungsmotor
- 12: elektrische Maschine
- 13: Klimaanlagenkompressor
- 14: Reibungskupplung
- 15: erstes Gangschaltteilgetriebe
- 16: zweites Gangschaltteilgetriebe
- 17: erste Eingangswelle
- 18: zweite Eingangswelle

- 21: Zahnrad
- 22: Zahnrad
- 23: Zahnrad
- 24: Zahnrad

- 28: Abtriebswelle

- 31: Zahnrad
- 32: Zahnrad
- 33: Zahnrad
- 34: Zahnrad

- 38: Ausgangswelle
- 39: Differential

- 41: Zahnrad (Schaltrad)
- 42: Zahnrad (Schaltrad)
- 43: Zahnrad (Schaltrad)
- 44: Zahnrad (Schaltrad)
- 45: Zahnrad (Festrad)
- 46: Zahnrad (Festrad)
- 47: Zahnrad (Schaltrad)
- 48: Zahnrad (Schaltrad)
- 49: Zahnrad (Zwischenrad)

- 51: Zahnrad (Schaltrad)
- 52: Zahnrad (Schaltrad)
- 53: Zahnrad (Festrad)
- 54: Zahnrad (Festrad)

- A: Schaltelement
- B: Schaltelement
- C: Schaltelement
- D: Schaltelement

## Patentansprüche

1. Hybridantriebssystem mit einer ersten Antriebsmaschine (11) als Verbrennungsmotor und einer zweiten Antriebsmaschine (12) als elektrische Maschine für ein Kraftfahrzeug, umfassend
ein erstes Gangschaltteilgetriebe (15) mit einer ersten Eingangswelle (17) die mit einer Abtriebswelle (28) mittels einer ersten Gruppe von Gangschaltzahnradpaaren (41/51, 42/52, 43/53, 44/54) direkt koppelbar ist, wobei die Gangschaltzahnradpaare (41/51, 42/52, 43/53, 44/54) der ersten Gruppe jeweils ein Zahnrad (41, 42, 43, 44) auf der ersten Eingangswelle (17) und jeweils ein Zahnrad (51, 52, 53, 54) auf der Abtriebswelle (28) aufweisen und wobei die erste Eingangswelle (17) mit der ersten Antriebsmaschine (11) über eine Reibungskupplung (14) koppelbar ist,
ein zweites Gangschaltteilgetriebe (16) mit einer zweiten Eingangswelle (18), die mit der Abtriebswelle (28) mittels einer zweiten Gruppe von Gangschaltzahnradpaaren (45/51, 46/52, 47/53) direkt koppelbar ist, wobei die Gangschaltzahnradpaare (45/51, 46/52, 47/53) der zweiten Gruppe jeweils ein Zahnrad (45, 46, 47) auf der zweiten Eingangswelle (18) und jeweils ein Zahnrad (51, 52, 53) auf der Abtriebswelle (28) aufweisen und wobei die zweite Eingangswelle (18) mit der zweiten Antriebsmaschine (12) fest antriebsverbunden ist,
**dadurch gekennzeichnet,**
**daß** zumindest zwei der Gangschaltzahnradpaare (41/51; 42/52) der genannten ersten Gruppe von Gangschaltzahnradpaaren (41/51, 42/52, 43/53, 44/54) ausschließlich durch schaltbare Losräder (41, 42) auf der ersten Eingangswelle (17) und schaltbare Losräder (51, 52) auf der Abtriebswelle (28) gebildet sind, wobei die schaltbaren Losräder (41, 42) auf der ersten Eingangswelle (17) mit der ersten Eingangswelle (17) und die schaltbaren Losräder (51, 52) auf der Abtriebswelle (28) mit der Abtriebswelle (28) über Schaltelemente (A, C) koppelbar sind.

2. Hybridantriebssystem nach Anspruch 1,
**dadurch gekennzeichnet,**
**daß** die zwei Gangschaltzahnradpaare (41/51; 42/52) aus ausschließlich schaltbaren Losrädern im ersten Gangschaltteilgetriebe (15) auf der ersten Eingangswelle (17) und der Abtriebswelle (28) angeordnet sind.

3. Hybridantriebssystem nach Anspruch 1 oder 2,
**dadurch gekennzeichnet,**
**daß** auf der ersten Eingangswelle (17) ausschließlich schaltbare Losräder (41, 42, 43, 44) vorgesehen sind.

4. Hybridantriebssystem nach einem der Ansprüche 1 bis 3,
**dadurch gekennzeichnet,**
**daß** im zweiten Gangschaltteilgetriebe (16) ausschließlich jeweils Gangschaltzahnradpaare aus einem mit seiner Welle verbundenen Festrad und einem mit seiner Welle schaltbaren Losrad vorgesehen sind.

5. Hybridantriebssystem nach Anspruch 4,
**dadurch gekennzeichnet,**
**daß** im zweiten Gangschaltteilgetriebe (16) zwei schaltbare Losräder (47, 48) auf der zweiten Eingangswelle (18) und zwei schaltbare Losräder (51, 52) auf der Abtriebswelle (28) angeordnet sind.

6. Hybridantriebssystem nach einem der Ansprüche 1 bis 5,
**dadurch gekennzeichnet,**
**daß** die erste Antriebsmaschine (11) über eine Reibungskupplung (14) mit der ersten Eingangswelle (17) direkt koppelbar ist.

7. Hybridantriebssystem nach einem der Ansprüche 1 bis 6,
**dadurch gekennzeichnet,**
**daß** die zweite Antriebsmaschine (12) direkt auf der zweiten Eingangswelle (18) angeordnet ist.

8. Hybridantriebssystem nach einem der Ansprüche 1 bis 7,
**dadurch gekennzeichnet,**
**daß** eine Nebenabtriebsmaschine (13), insbesondere ein Klimaanlagenkompressor auf einer der Eingangswellen (17, 18) angeordnet ist.

9. Hybridantriebssystem nach einem der Ansprüche 1 bis 6 und 8,
**dadurch gekennzeichnet,**
**daß** die zweite Antriebsmaschine (12) über eine Getriebestufe (22/32) oder
einen Ketten- oder Riementrieb mit der zweiten Eingangswelle (18) fest antriebsverbunden ist.

10. Hybridantriebssystem nach einem der Ansprüche 1 bis 7 und 9,
**dadurch gekennzeichnet,**
**daß** eine Nebenabtriebsmaschine (13), insbesondere ein Klimaanlagenkompressor mit einer Eingangswellen (17, 18) über eine Getriebestufe (23/33) oder einen Ketten- oder Riementrieb antriebsverbunden ist.

11. Hybridantriebssystem nach einem der Ansprüche 1 bis 10,
**dadurch gekennzeichnet,**
**daß** die beiden Eingangswellen (17, 18) und die Abtriebswelle (28) in zueinander paralleler Anordnung liegen

12. Hybridantriebssystem nach einem der Ansprüche 1 bis 11,
**dadurch gekennzeichnet,**
**daß** eines der Gangschaltteilgetriebe (15, 16) einen Rückwärtsgang umfaßt.

13. Verfahren zum Betrieb eines Hybridantriebssystems nach einem der vorangehenden Ansprüche,
**dadurch gekennzeichnet,**
**daß** ein Wechsel zwischen einer Kopplung der ersten Antriebswelle (17) mit der Abtriebswelle (28) und einer Kopplung der zweiten Antriebswelle (18) mit der Abtriebswelle (28) ausschließlich durch ein Schalten von zumindest zwei Gangschaltzahnradpaaren (41/51, 42/52) bewirkt wird, wobei die zumindest zwei genannten Gangschaltzahnradpaare (41/51, 42/52) ausschließlich durch schaltbare Losräder (41, 42) auf der ersten Eingangswelle (17) und schaltbare Lösräder (51, 52) auf der Abtreibswelle (28) gebildet werden und beim Schalten die schaltbaren Losräder (41, 42) auf der ersten Eingangswelle (17) mit der ersten Eingangswelle (17) und die schaltbaren Losräder (51, 52) auf der Abtriebswelle (28) mit der Abtriebswelle über Schaltelemente (A, C) koppelbar sind.

## Claims

1. A hybrid drive system comprising a first drive machine (11) as an internal combustion engine, and a second drive machine (12) as an electric engine, for a motor vehicle, comprising:
a first gearshift sub-transmission (15) having a first input shaft (17) and being directly coupled to an output shaft (28) by means of a first group of shifting gearwheel pairs (41/51, 42/52, 43/53, 44/54), wherein the shifting gearwheel pairs (41/51, 42/52, 43/53, 44/54) of the first group each have a gearwheel (41, 42, 43, 44) on the first input shaft (17) and a gearwheel (51, 52, 53, 54) on the output shaft (28), and wherein the first input shaft (17) is coupled to the first drive machine (11) by means of a friction clutch (14),
a second gearshift sub-transmission (16) having a second input shaft (18) and being directly coupled to the output shaft (28) by means of a second group of shifting gearwheel pairs (45/51, 46/52, 47/53, 48/54), wherein the shifting gearwheel pairs (45/51, 46/52, 47/53, 48/54) of the second group each have a gearwheel (45, 46, 47) on the second input shaft (18) and a gearwheel (51, 52, 53) on the output shaft (28), and wherein the second input shaft (18) is in a drive connection with the second drive machine (12),
**characterized in**
**that** at least two of the shifting gearwheel pairs (41/51, 42/52) of said first group of shifting gearwheel pairs (41/51, 42/52, 43/53, 44/54) are formed exclusively by engaging and disengaging idler gears (41, 42) on the first input shaft (17) and by engaging and disengaging idler gears (51, 52) on the output shaft (28),
wherein the engaging and disengaging idler gears (41, 42) on the first input shaft (17) can be coupled to the first input shaft (17) by switching elements (A, C) and the engaging and disengaging idler gears (51, 52) on the output shaft (28) can be coupled to the output shaft (28) by the switching elements (A, C).

2. The hybrid drive system according to claim 1,
**characterized in**
**that** the two shifting gearwheel pairs (41/51, 42/52) are formed exclusively by engaging and disengaging idler gears in the first gearshift sub-transmission (15) and arranged on the first input shaft (17) and the output shaft (28).

3. The hybrid drive system according to claim 1 or 2,
**characterized in**
**that** on the first input shaft (17) exclusively engaging and disengaging idler gears (41, 42, 43, 44) are provided.

4. The hybrid drive system according to one of claims 1 to 3,
**characterized in**
**that** in the second gearshift sub-transmission (16) exclusively shifting gearwheel pairs from one fixed gear connected to its shaft and one engaging and disengaging idler gear connected to its shaft are provided.

5. The hybrid drive system according to claim 4,
**characterized in**
**that** in the second gearshift sub-transmission (16) two engaging and disengaging idler gears (47, 48) are arranged on the second input shaft (18) and two engaging and disengaging idler gears (51, 52) are arranged on the output shaft (28).

6. The hybrid drive system according to one of claims 1 to 5,
**characterized in**
**that** the first drive machine (11) can be coupled to the first input shaft (17) via a friction clutch (14).

7. The hybrid drive system according to one of claims 1 to 6,
**characterized in**
**that** the second drive machine (12) is arranged directly on the second input shaft (18).

8. The hybrid drive system according to one of claims 1 to 7,
**characterized in**
**that** an auxiliary drive machine (13), in particular an air conditioner compressor is arranged on one of the input shafts (17, 18).

9. The hybrid drive system according to one of claims 1 to 6 and 8,
**characterized in**
**that** the second drive machine (12) is drive-connected to the second input shaft (18) via a transmission step (22/32) or a chain or belt drive.

10. The hybrid drive system according to one of claims 1 to 7 and 9,
**characterized in**
**that** an auxiliary drive machine (13), in particular an air conditioner compressor is drive-connected to one of the input shafts (17, 18) via a transmission step (23/33) or a chain or belt drive.

11. The hybrid drive system according to one of claims 1 to 10,
**characterized in**
**that** the two input shafts (17, 18) and the output shaft (28) are in parallel arrangement to one another.

12. The hybrid drive system according to one of claims 1 to 11,
**characterized in**
**that** one of the gearshift sub-transmissions (15, 16) comprises a reverse gear.

13. Method for the operation of a hybrid drive system a one of the preceding claims,
**characterized in**
**that** a shifting between a coupling of the first input shaft (17) with the output shaft (28) and a coupling of the second input shaft (18) with the output shaft (28) is brought about solely by a shifting of at least two shifting gearwheel pairs (41/52, 42/52), wherein said at least two shifting gearwheel pairs (41/52, 42/52) are formed exclusively by engaging and disengaging idler gears (41, 42) on the first input shaft (17) and by engaging and disengaging idler gears (51, 52) on the output shaft (28), and during shifting the engaging and disengaging idler gears (41, 42) on the first input shaft (17) can be coupled to the first input shaft (17) by switching elements (A, C) and the engaging and disengaging idler gears (51, 52) on the output shaft (28) can be coupled to the output shaft (28) by the switching elements (A, C).

## Revendications

1. Système de propulsion hybride comportant une première machine d'entraînement (11) comme moteur à combustion interne et une deuxième machine d'entraînement (12) comme moteur électrique pour un véhicule automobile, comprenant
un premier engrenage partiel de passage de rapport de vitesse (15) avec un premier arbre d'entrée (17) qui peut être couplé directement avec un arbre de sortie (28) au moyen d'un premier groupe de paires de roues dentées de passage de rapport de vitesse (41/51, 42/52, 43/43, 44/54), dans lequel les paires de roues dentées de passage de rapport de vitesse (41/51, 42/52, 43/43, 44/54) du premier groupe présentent respectivement une rue dentée (41,42,43,44) sur le premier arbre d'entrée (17) et respectivement une roue dentée (51,52,53,54) sur l'arbre de sortie (28) et dans lequel le premier arbre d'entrée (17) peut être couplé avec la première machine d'entraînement (11) via un embrayage à friction (14),
un deuxième égrenage partiel de passage de rapport de vitesse (16) avec un deuxième arbre d'entrée (18), qui peut être couplé directement avec l'arbre de sortie (28) au moyen d'un deuxième groupe de paires de roues dentées de passage de rapport de vitesse (45/51, 46/52, 57/53), dans lequel les paires de roues dentées de passage de rapport de vitesse (45/51, 46/52, 57/53) du deuxième groupe présentent respectivement une roue dentée (45,46,47) sur le deuxième arbre d'entrée (18) et respectivement une roue dentée (51,52,53) sur l'arbre de sortie (28) et dans lequel le deuxième arbre d'entre (18) est relié solidement en entraînement avec la deuxième machine d'entraînement (12),
**caractérisé en ce que**
au moins deux des paires de roues dentées de passage de rapport de vitesse (41/51 ; 42/52) dudit premier groupe de paires de roues dentées de passage de rapport de vitesse (41/51, 42/52, 43/53, 44/54) sont formées exclusivement par des roues mobiles (41,42) embrayables sur le premier arbre d'entrée (17) et des roues mobiles embrayables (51,52) sur l'arbre de sortie (28), dans lequel les roues mobiles embrayables (41,42) sur le premier arbre d'entrée (17)peuvent être couplées avec le premier arbre d'entrée (17) et les roues mobiles embrayables (51,52) sur l'arbre de sortie (28) peuvent être couplées avec l'arbre de sortie (28) via des éléments de commutation (A,C).

2. Système de propulsion hybride selon la revendication 1, **caractérisé en ce que** les deux paires de roues dentées de passage de rapport de vitesse (41/51 ;42/52) constituées exclusivement de roues mobiles embrayables sont disposées dans le premier engrenage partiel de passage de rapport de vitesse (15) sur le premier arbre d'entrée (17) et l'arbre de sortie (28).

3. Système de propulsion hybride selon la revendication 1 ou 2, **caractérisé en ce que** sur le premier arbre d'entrée (17) exclusivement des roues mobiles embrayables (41,42,43,44) sont prévues.

4. Système de propulsion hybride selon une des revendications 1 à 3, **caractérisé en ce que** dans le deuxième engrenage partiel de passage de rapport de vitesse (16) exclusivement des paires de roues dentées de passage de rapport de vitesse respectives constituées d'une roue fixe reliée à son arbre et d'une roue mobile embrayables avec son arbre sont prévues.

5. Système de propulsion hybride selon la revendication 4, **caractérisé en ce que** dans le deuxième engrenage partiel de passage de rapport de vitesse (16) deux roues mobiles embrayables (47,48) sont disposées sur le deuxième arbre d'entrée (18) et deux roues mobiles embrayables (51,52) sont disposées sur l'arbre de sortie (28).

6. Système de propulsion hybride selon une des revendications 1 à 5, **caractérisé en ce que** la première machine d'entraînement (11) peut être couplée directement via un embrayage à friction (14) avec le premier arbre d'entrée (17).

7. Système de propulsion hybride selon une des revendications 1 à 6, **caractérisé en ce que** la deuxième machine d'entraînement (12) est disposée directement sur le deuxième arbre d'entrée (18).

8. Système de propulsion hybride selon une des revendications 1 à 7, **caractérisé en ce que** une machine d'entraînement annexe (13), notamment un compresseur d'installation de climatisation est disposé sur un des arbres d'entrée (17,18).

9. Système de propulsion hybride selon une des revendications 1 à 6 et 8, **caractérisé en ce que** la deuxième machine d'entraînement (12) est reliée solidement en entraînement via un étage d'engrenage (22/32) ou une transmission à chaîne ou à courroie avec le deuxième arbre d'entrée (18).

10. Système de propulsion hybride selon une des revendications 1 à 7 et 9, **caractérisé en ce que** une machine d'entraînement annexe (13), notamment un compresseur d'installation de climatisation est reliée en entraînement avec un arbre d'entrée (17,18) via un étage d'engrenage (23/33) ou une transmission à chaîne ou courroie.

11. Système de propulsion hybride selon une des revendications 1 à 10, **caractérisé en ce que** les deux arbres d'entrée (17,18) et l'arbre de sortie (28) sont situés en disposition parallèle l'un à l'autre.

12. Système de propulsion hybride selon une des revendications 1 à 11, **caractérisé en ce que** un des engrenages partiels de passage de rapport de vitesse (15,16) comprend un passage de marche arrière.

13. Procédé de fonctionnement d'un système de propulsion hybride selon une des revendications précédentes,
**caractérisé en ce que**
un changement entre un couplage du premier arbre d'entraînement (17) avec l'arbre de sortie (28) et un couplage du deuxième arbre d'entraînement (18) avec l'arbre de sortie (28) est provoqué exclusivement par un embrayage d'au moins deux paires de roues dentées de passage de rapport de vitesse (41/51,42/52), dans lequel au moins deux dites paires de roues dentées de passage de rapport de vitesse (41/51,42/52) sont formées exclusivement par des roues mobiles (41,42) embrayables sur le premier arbre d'entrée (17) et des roues mobiles embrayables (51,52) sur l'arbre de sortie (28), et lors de l'embrayage les roues mobiles embrayables (41,42) sur le premier arbre d'entrée (17)peuvent être couplées avec le premier arbre d'entrée (17) et les roues mobiles embrayables (51,52) sur l'arbre de sortie (28) peuvent être couplées avec l'arbre de sortie (28) via des éléments de commutation (A,C).
